# EUROPÄISCHE PATENTSCHRIFT

(11) **EP 1 428 697 B1**
(45) Veröffentlichungstag und Bekanntmachung des Hinweises auf die Patenterteilung: **11.01.2006**
(21) Anmeldenummer: 03024319.0
(22) Anmeldetag: 24.10.2003
(51) Int. Cl.: B60D 1/54

(54) **Anhängekupplung für Kraftfahrzeuge**
Trailer hitch assembly
Dipositif d'attelage

(30) Priorität: 13.11.2002 DE 10252722
(43) Veröffentlichungstag der Anmeldung: 16.06.2004
(73) Patentinhaber: Westfalia Automotive GmbH & Co. KG, 33378 Rheda-Wiedenbrück (DE)
(72) Erfinder: Aufderheide, Reinhold, 33397 Rietberg (DE); Domke, Friedrich, 33442 Herzebrock-Clarholz (DE); Giesbrecht, Alexander, 59320 Ennigerloh (DE); Hermbuch, Gerhard, 33449 Langenberg (DE); Mersch, Andreas, 33378 Rheda-Wiedenbrück (DE); Peitz, Jürgen, 33378 Rheda-Wiedenbrück (DE); Vahle, Dirk, 59320 Ennigerloh (DE); Weniger, Burkhard, 59514 Welver-Berwicke (DE); Wyrwich, Martin, 33378 Rheda-Wiedenbrück (DE)
(74) Vertreter: Valentin, Ekkehard

(56) Entgegenhaltungen:
- EP-A- 0 288 366
- DE-A- 19 701 273
- DE-A- 19 858 978

## Beschreibung

Die Erfindung betrifft eine Anhängekupplung für Kraftfahrzeuge, umfassend eine fahrzeugfest angeordnete, schwenkbar sowie axial verschieblich gelagerte Kugelstange, die an ihrem freien Ende eine Kupplungskugel trägt und sowohl in ihrer Ruhelage als auch in ihrer Betriebslage über in Eingriff bringbare Formschlußkonturen einerseits eines Kugelstangenlagerkopfes und andererseits eines diesem gegenüberliegenden Anbauflansches drehfest festlegbar ist.

Eine Anhängekupplung dieser Art ist durch die DE 198 59 961 A1 bekanntgeworden. Die Kugelstange, bestehend aus Kugelhals und Kupplungskugel sowie Lagerhülse bzw. Kugelstangenlagerkopf, wird sowohl in der Ruhelage, in welcher sich die Kugelstange in etwa quer zur Fahrzeuglängsrichtung unter dem Stoßfänger befindet, als auch in der Betriebslage, in welcher sich die Kugelstange im wesentlichen in Fahrzeuglängsrichtung befindet, mittels der Formschlußverbindungen drehfest festgelegt. Die Formschlußverbindungen in Form einer Verzahnung sowie einer Gegenverzahnung greifen in den Drehendstellungen des Kugelstangenlagerkopfes ineinander.

Zum Festlegen und Freigeben der Kugelstange dient ein verstellbares, die Lagerhülse bzw. den Kugelstangenlagerkopf abstützendes Widerlager, das wie der Kugelstangenlagerkopf auf einem Lagerbolzen angeordnet ist, der über einen Befestigungsansatz bzw. Anbauflansch an einem mit dem Fahrzeug verbundenen Querrohr befestigt ist. In der einen Axialstellung des die Lagerhülse abstützenden Widerlagers stehen die Formschlußkonturen von Lagerbolzen und Lagerhülse so miteinander in Eingriff, daß die Lagerhülse und damit die Kugelstange gegenüber dem Fahrzeug nicht verdreht werden kann. In der zweiten Axialstellung des dann von dem Anbauflansch bzw. Befestigungsansatz entfernten Widerlagers kann die Lagerhülse so weit von dem Anbauflansch des Lagerbolzens abgerückt werden, daß die Formschlußkonturen außer Eingriff kommen und danach die Lagerhülse samt daran angeordneter Kugelstange zwischen der Ruhe- und der Betriebslage verschwenkt werden kann. Die jeweilige Verriegelungsposition wird danach von Hand durch eine erneute Axialverschiebung des Widerlagers erreicht.

Der Erfindung liegt die Aufgabe zugrunde, eine gattungsgemäße Anhängekupplung zu schaffen, die ein einfacheres sowie sicheres Verstellen und Festlegen der Kugelstange in den Drehendstellungen ermöglicht.

Diese Aufgabe wird erfindungsgemäß dadurch gelöst, daß der Kugelstangenlagerkopf auf einer am Anbauflansch befestigten Hohlwelle angeordnet ist, die zentral integriert mit einer axial wirkenden Verriegelung des Kugelstangenlagerkopfs zum in Eingriff bringen der Formschlußkonturen sowohl in der Betriebslage als auch In der Ruhelage der Kugelstange ausgebildet ist, wobei sich der entriegelte Kugelstangenlagerkopf aufgrund des Gewichts der Kugelstange selbständig axial von dem Anbauflansch weg bewegt. Durch die Abkehr von einer auf einem Lagerbolzen bzw. einer durchgängigen Lagerachse gelagerten Kugelstange, die erfindungsgemäß vielmehr auf einer Hohlwelle mit zentral integrierter Verriegelung angeordnet ist, läßt sich ein in sich geschlossenes, weitestgehend wartungsfreies System erreichen. Die axial wirkende Verriegelung ermöglicht zudem eine gleichzeitige selbsttätige axiale Zwangsverschiebung der Kugelstange, sobald die Sperrung in einer Drehendlage aufgehoben wird.

Eine bevorzugte Ausführung der Erfindung sieht vor, daß die Verriegelung einen in der Hohlwelle geführten, gegen ein anstehendes Kraftelement über ein von außen betätigbares Druck- oder Zugmittel zurückstellbaren Sperrbolzen und mit diesem zusammenwirkende, in Radialbohrungen der Hohlwelle angeordnete Kugeln umfaßt. In der Verriegelungsposition, die vorteilhaft durch eine selbsthemmende Schräge und/oder einen Hinterschnitt des Sperrbolzens zusätzlich gesichert werden kann, drückt der Sperrbolzen die Kugeln in den Radialbohrungen nach außen und verhindert damit eine axiale Verstellung der Kugelstange. Wenn dann das Kraftelement, z.B. eine Druckfeder, vorgespannt bzw. zusammengezogen wird, beispielsweise mittels eines Handrades, wie aus der DE-U-94 08 478.5 bekannt, über das eine Zahnstange einen Bowdenzug als Verbindung zum Sperrbolzen betätigt, so daß der Sperrbolzen zurückgezogen wird, fallen die zuvor auseinandergedrückten Kugeln nach innen. Die Kugeln legen sich vor den Kopf des Sperrbolzens und verhindern, daß der Sperrbolzen sich aus seiner zurückgezogenen Lage axial nach vorne bewegen kann.

Die Kugelstange kommt durch das Zurückziehen des Sperrbolzens aus ihrer Formschlußverbindung von Befestigungs- und Anbauflansch frei und kann nach dem Entriegeln somit unter der Schwerkraft bei gleichzeitiger axialer Verschiebung in eine Zwischenposition schwenken. Aus dieser heraus läßt sie sich manuell oder motorbetrieben in die gewünschte, jeweils durch einen äußeren Anschlag gesicherte Drehendlage verschwenken und verriegeln, wozu dem Kraftelement die Entspannung ermöglicht wird, so daß der Sperrbolzen vorrücken und die Kugeln wieder nach außen in ihre Einrastposition drücken kann. Alternativ zur mechanischen Handrad-Auslösung ist z.B. auch ein motorischer Auslöseantrieb oder der Einsatz von Elektro- bzw. Hubmagneten möglich, deren axiale Bewegung ein weiterer Hubmagnet als Sicherung sperren kann. Bei einer Betätigung wird über eine Steuerung zunächst der Sicherungshubmagnet und anschließend der Hauptmagnet gelöst.

Nach einer Ausgestaltung der Erfindung sind den Kugeln im Kugelstangenlagerkopf mit einseitigen Anlaufschrägen ausgebildete Aufnahmen, z.B. eine Ringnut oder Rille, die sich vorteilhaft in einem im Kugelstangenlagerkopf befestigten Lagerring vorsehen lassen, zugeordnet. Die zum Anbauflansch ausgerichtete Anlaufschräge begünstigt beim Verriegelungsvorgang das automatische Anziehen des Kugelstangenlagerkopfes in die Formschlußverbindung mit dem Befestigungs- bzw. Anbauflansch.

Erfindungsgemäß wird vorgeschlagen, daß zur Formschlußverbindung von Kugelstangenlagerkopf und Anbauflansch in deren einander gegenüberliegenden Stimflächen auf gleichen Teilkreisen gleichmäßig verteilt einerseits Kugeln und andererseits Kalotten ausgebildet sind. Alternativ eignen sich Verzahnungen oder dergleichen Rastmittel, die in den Drehendlagen ineinandergreifen.

Damit die Konturen der Formschlußverbindung während der Schwenkbewegung der Kugelstange auf Abstand voneinander gehalten werden und z.B. die Kugeln während des Verschwenkweges nicht rattemd über die komplementären Kalotten in der Stirnfläche des Kugelstangenlagerkopfes hinweggleiten, sieht eine Ausführung der Erfindung ein in einem von einer Ausdrehung des Kugelstangenlagerkopfes konzentrisch umschlossenen Kragen der Hohlwelle eingesetztes, mit einem an seinem vorderen Ende als Halbkugel ausgebildetes, bei drehfester Ineingriffposition der Formschlußverbindung in eine Halbkugel-Ausnehmung im Grund der Ausdrehung eintauchendes und bei der axialen Verschiebung des Kugelstangenlagerkopfes aus der Halbkugel-Ausnehmung mit der Halbkugel freikommendes und sich dann an den Grund der Ausdrehung anlegendes Distanzhalterelement vor. Dieses Distanzhalterelement, vorteilhaft in Form eines mit der Halbkugel ausgebildeten Bolzens, gewährleistet nach dem Entriegeln des Sperrbolzens das Einhalten des für eine ungestörte Schwenkbewegung selbsttätig eingestellten axialen Abstandes zwischen der Stimfläche des Kugelstangenlagerkopfes und dem Befestigungs- bzw. Anbauflansch. Eine solche Halbkugel-Ausnehmung ist dem Distanzhalterelement in jeder Drehendlage, d.h. den Verriegelungspositionen, in der Ausdrehung zugeordnet Erst wenn das Distanzhalterelement mit seinem Halbkugel-Kopf in eine Ausnehmung eingetaucht ist, kann das Kraftelement seine Wirkung entfalten und den Sperrbolzen nach vorne in die Verriegelungsstellung bewegen.

Nach einem Vorschlag der Erfindung ist in einer ausgehend von einem von einer Ausdrehung des Kugelstangenlagerkopfes konzentrisch umschlossenen Kragen der Hohlwelle ausgebildeten Bohrung, vorzugsweise Diagonalbohrung, eine beim Lösen der Verriegelung des Sperrbolzens den Kugelstangenlagerkopf axial verschiebende Kugel angeordnet. Diese bewirkt bzw. unterstützt durch ihre Führung in der Bohrung bzw. Diagonalbohrung bei zurückgezogenem Sperrbolzen das axiale Verschieben und dabei schwerkraftbedingt selbsttätige Verschwenken der Kugelstange in eine Zwischenposition. Erst nachdem die Kugelstange manuell oder motorisch in die gewünschte Drehendlage (Betriebs- oder Ruhelage) verschwenkt worden ist, kann die Halbkugel des Distanzhalterelementes wieder in die Halbkugel-Ausnehmung (Kalotte) des Kugelstangenlagerkopfes eintreten, womit die Axialbewegung der Kugelstange in die Verriegelungsstellung freigegeben ist. Die Kugeln werden von dem Sperrbolzen in den Lagerring gedrückt und ziehen die Kugelstange gezielt in die drehfeste Formschlußverbindung. Wenn dann, am Beispiel der Handrad-Betätigung, das Handrad für eine weitere Bewegung des Sperrbolzens geschlossen wird, bleibt die Verriegelung der Kugelstange bis zur nächsten Auslösung einer Schwenkbewegung mit axialer Verschiebung aufrechterhalten.

Nach einer anderen Ausführung der Erfindung ist der Kugelstangenlagerkopf mit einer Ausdrehung konzentrisch auf einem Kragen der Hohlwelle angeordnet und in der Wand der Ausdrehung sind einander zugewandt zwei Auslösenocken vorgesehen, denen in einer sich bis in den Sperrbolzen fortsetzenden Radialbohrung des Hohlwellen-Kragens ein Stift zugeordnet ist, der in seiner Deckungsposition mit den Auslösenocken eine Kugel in die Radialbohrung des Sperrbolzens beaufschlagt. Nur in den Drehendlagen der Kugelstange, in denen jeweils der eine oder der andere Nocken die Kugel in die Bohrung des Sperrbolzens hineindrückt, wird der Sperrbolzen freigegeben und kann sich beaufschlagt von dem Kraftelement frei nach vorne bewegen und die Kugeln zur Verriegelung über die Radialbohrungen der Hohlwelle nach außen in den Lagerring des Kugelstangenlagerkopfes drücken.

Bei dieser Variante zur Auslösung des Sperrbolzens wird erfindungsgemäß vorgeschlagen, daß der Sperrbolzen mit einer Verdrehsicherung versehen ist. Die Verdrehsicherung gewährleistet die exakte Einhaltung der Einbaulage des Sperrbolzens, damit dessen Radialbohrung in den Drehendlagen in Flucht mit dem von den Auslösenocken beaufschlagten Stift gelangt, der die Kugel in den Sperrbolzen hineindrückt.

Die durch den Sperrbolzen erreichte Verriegelung läßt sich vorteilhaft zusätzlich dadurch sichern, daß der Sperrbolzen mit einer selbsthemmenden Schräge und/oder einem Hinterschnitt ausgebildet ist. Selbst bei hohen auftretenden Kräften wird damit verhindert, daß sich der Sperrbolzen selbsttätig, gegen das Kraftelement aus seiner Verriegelungsposition verlagern kann.

Nach einer Ausgestaltung der Erfindung ist von der dem Kugelstangenlagerkopf abgewandten Außenseite des Anbauflansches her in eine zentrische Bohrung des Anbauflansches eine die zentrische Bohrung mit einem Flansch überkragende Montagebuchse mit einer Nabe eingesetzt und die Hohlwelle über in den Flansch der Montagebuchse angeordnete Schrauben befestigt. Die Verschraubung der Hohlwelle über einen Flansch begünstigt die zentrale Anordnung des Verriegelungsmechanismus.

Die Nabe der Montagebuchse läßt sich erfindungsgemäß vorteilhaft sogleich als Kammer zur Aufnahme des den Sperrbolzen beaufschlagenden Kraftelementes ausbilden. Ein zusätzliches Bauteil ist somit entbehrlich, wobei die Nabe das Kraftelement sogleich nach außen geschützt aufnimmt.

Nach einem Vorschlag der Erfindung ist zwischen dem von dem Anbauflansch entfernten Ende der Hohlwelle und einem dort vorgesehenen Verbindungsblech eine Ausgleichsscheibe angeordnet. Die Ausgleichsscheibe ermöglicht eine Anpassung bei der Montage der Kugelstange. Sowohl der Anbauflansch als auch das Verbindungsblech, beides zur Befestigung der Anhängekupplung an einen Querträger des Kraftfahrzeuges geeignet, können als einfache Laser- oder Stanzteile hergestellt werden.

Nach einer Weiterbildung der Erfindung ist eine durch das Verbindungsblech und die Ausgleichsscheibe gesteckte Zentralschraube in ein Innengewinde der Hohlwelle eingeschraubt. Gleichwohl ist es alternativ möglich, die Kugelstange ohne das Verbindungsblech und nur über den Anbauflansch mit dem Querträger zu verbinden. Es reicht dann aus, die Hohlwelle mit einem Stopfen zu verschließen, wie auch eine Ausgleichsscheibe dann entfallen kann.

Anbauvarianten der Erfindung sehen vor, daß das Verbindungsblech und/oder der Anbauflansch an einem Mittelteil eines mehrteiligen Querträgers oder außermittig am Querträger befestigt ist bzw. sind. Trotz einer außermittigen Anbringung der Kugelstange befindet sich die Kupplungskugel in der Betriebslage mittig zur Fahrzeuglängsrichtung.

Der Kugelstange läßt sich erfindungsgemäß ein deren Schwenkbewegungen mitmachender Steckdosenhalter zuordnen. Dieser kann sich direkt am Kugelhals oder am Kugelstangenlagerkopf selbst bzw. wahlweise rechts oder links davon befinden. Ein zur Stromversorgung für einen vorteilhaften motorischen Dreh- und Schwenkantrieb der Kugelstange dienender, nicht unmittelbar an der Kugelstange vorgesehener Steckdosenhalter kann hierbei bei der Schwenkbewegung durch entsprechend angebrachte Mitnehmemocken von seiner Ruheposition in die Betriebsposition gebracht werden. Das Zurückholen kann über eine Feder erfolgen.

Wenn zumindest einige Bauteile der Anhängekupplung erfindungsgemäß aus Leichtmetall gefertigt sind, z.B. aus Aluminium oder dergleichen bestehen, läßt sich eine Gewichtsreduzierung erreichen.

Weiterhin wird vorgeschlagen, daß mechanisch stark belastete und beanspruchte Bereiche der Kupplungsbauteile, z.B. der Kugelstangenlagerkopf und/oder die Kalotten, gehärtet oder zumindest bereichsweise mit einer härteren Schicht versehen sind, wie vor allem beim Einsatz von Leichtmetall-Bauteilen.

Weitere Merkmale und Einzelheiten der Erfindung ergeben sich aus den Ansprüchen und der nachfolgenden Beschreibung von in den Zeichnungen dargestellten Ausführungsbeispielen der Erfindung. Es zeigen:
- Fig. 1: in einer perspektivischen Gesamtansicht eine Anhängekupplung mit in ihrer Betriebslage verriegelter, sich mittig in Längsrichtung eines nicht dargestellten Fahrzeugs erstreckender Kugelstange, angeschlossen an einen Handrad-Auslösemechanismus;
- Fig.2: die Anhängekupplung nach Fig. 1 in vergrößerter perspektivischer Darstellung mit in ihrer Ruhelage verriegelter Kugelstange, in der sich diese unter einem Stoßfänger des nicht gezeigten Kraftfahrzeugs befindet;
- Fig.3: die Anhängekupplung nach Fig. 2 in einem Längsschnitt mit versetzter Schnittebene;
- Fig. 4: die Anhängekupplung nach Fig. 3 mit axial verschobenem Kugelstangenlagerkopf der Kugelstange;
- Fig. 5: in einem Längsschnitt eine andere, in einer Diagonalbohrung eine Kugel aufweisende Anhängekupplung;
- Fig. 6: die Anhängekupplung nach Fig. 5 mit axial verschobenem Kugelstangenlagerkopf der Kugelstange;
- Fig. 7: in einem Längsschnitt eine weitere Ausführung einer Anhängekupplung nach Fig. 1 oder 2, die für einen Sperrbolzen eine integrierte, in einer Radialbohrung angeordnete Auslösung aufweist; und
- Fig. 8: die Anhängekupplung nach Fig. 7 im Querschnitt entlang der Linie VIII-VIII.

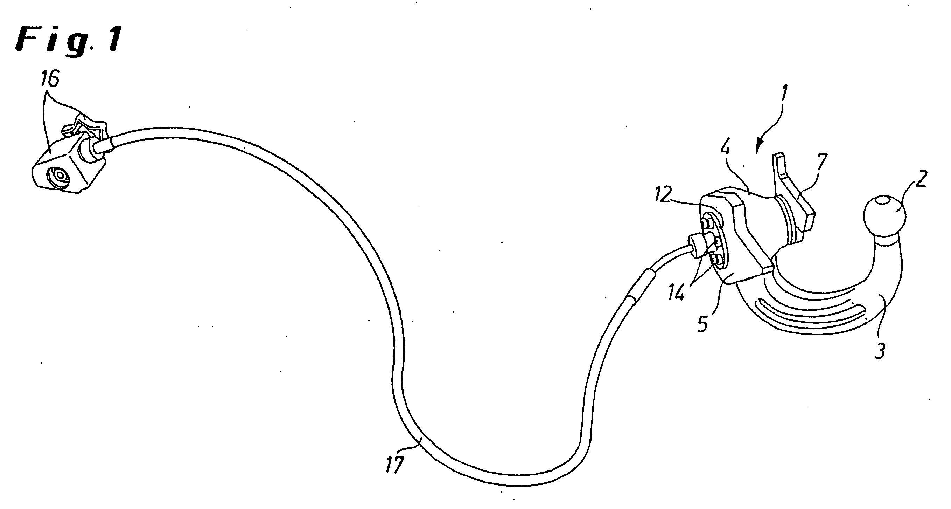

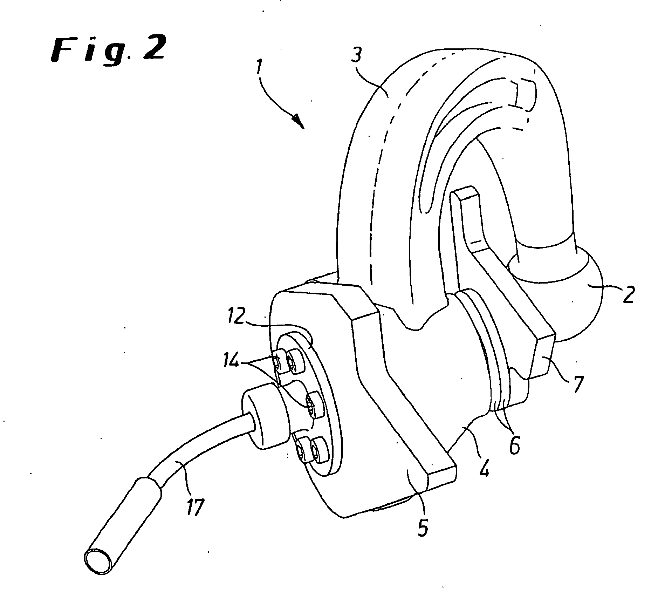

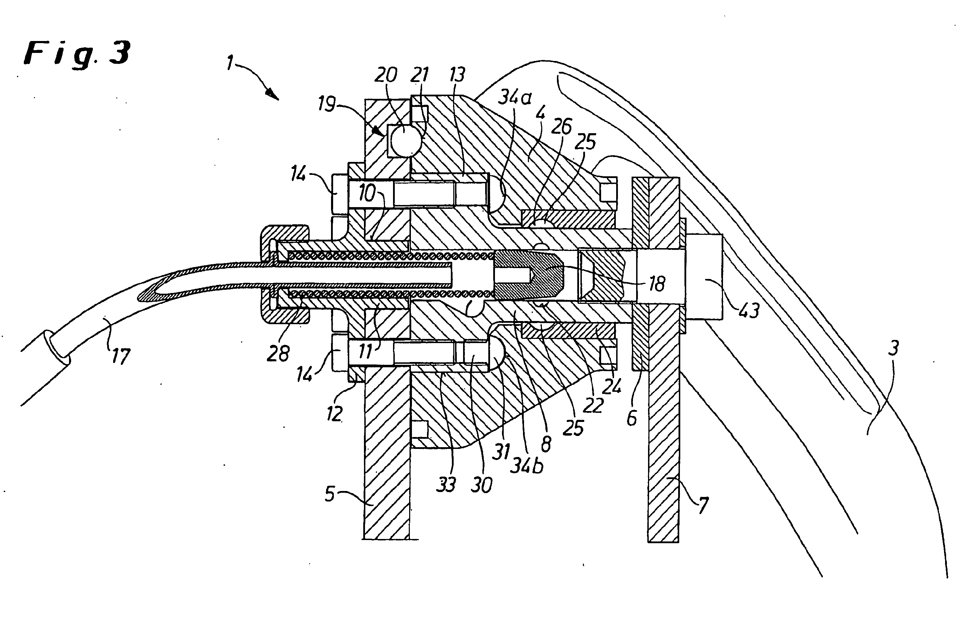

Eine in den Fig. 1 und 2 gezeigte Anhängekupplung 1 ist über einen ein- oder mehrteiligen Querträger an einem Fahrzeug befestigt (nicht dargestellt). Die Anhängekupplung 1 umfaßt im Ausführungsbeispiel eine gekröpfte, an ihrem freien Ende eine Kupplungskugel 2 tragende Kugelstange 3, die mit ihrem Kugelstangenlagerkopf 4 zwischen einem Anbauflansch 5 und einem unter Zwischenschaltung einer Ausgleichsscheibe 6 gegenüberliegenden Verbindungsblech 7 angeordnet ist. Die Halterung des Kugelstangenlagerkopfes 4 in der zwischen dem Anbauflansch 5 und dem Verbindungsblech 7 eingeschlossenen Einbaulage erfolgt mittels einer Hohlwelle 8 (vgl. die Fig. 3 bis 8), auf der die Kugelstange 3 mit ihrem Kugelstangenlagerkopf 4 gelagert ist.

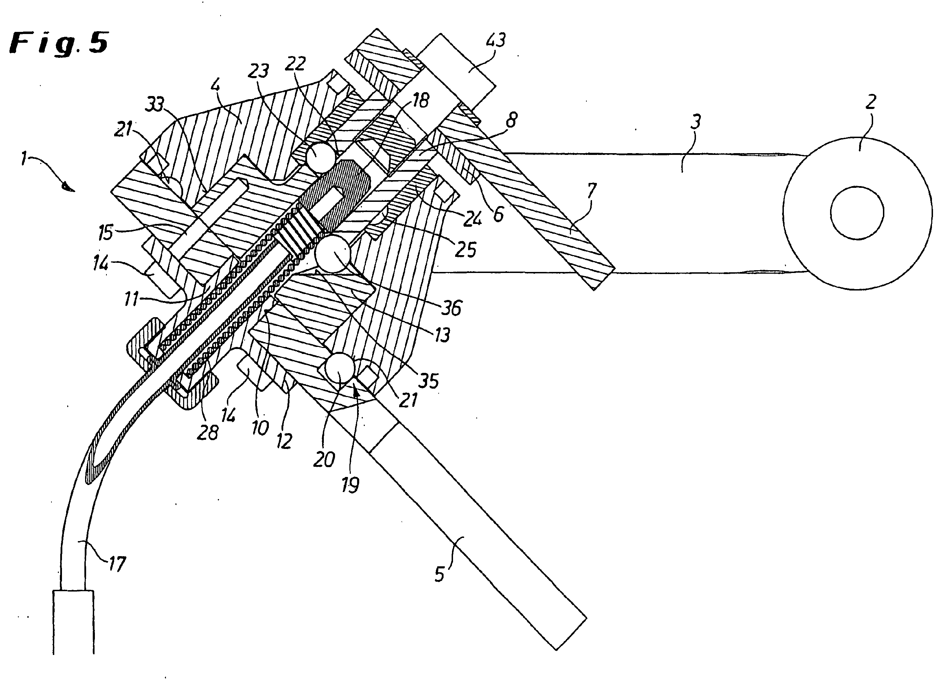

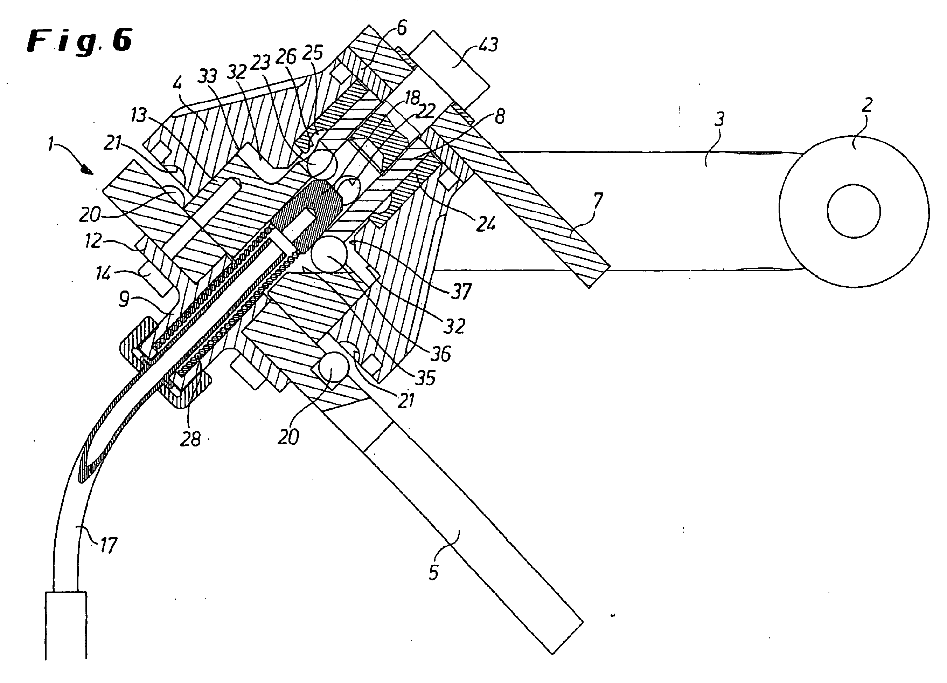

Die Hohlwelle 8 ist mit einer Montagebuchse 9 verschraubt, die von der Außenseite des Anbauflansches 5 her in eine in Bezug auf die Hohlwelle 8 zentrische Bohrung 10 mit einer Nabe 11 eingesetzt ist, wobei die zentrische Bohrung 10 der Außenseite des Anbauflansches 5 von einem Flansch 12 der Montagebuchse 9 überkragt wird (vgl. die Fig. 3 bis 8). Durch den Flansch 12 in einen Kragen 13 der Hohlwelle 8 eingeschraubte Befestigungsschrauben 14 sorgen für die exakte Positionierung der Hohlwelle 8, was außerdem noch durch Zentrierstifte 15 (vgl. z.B. die Fig. 5 und 6) unterstützt wird, und verhindern gleichzeitig Verschiebungen der Hohlwelle 8. Die Anhängekupplung 1 wird mit ihrem Anbauflansch 5 und/oder ihrem Verbindungsblech 7 an einem ein- oder mehrteiligen Querträger befestigt, der mit einem Kraftfahrzeug verbunden ist (nicht dargestellt).

Die Fig.1 zeigt die in die Betriebslage und die Fig. 2 die in die Ruhelage verschwenkte Kugelstange 3 der Anhängekupplung 1. In diesen Drehendlagen ist die Kugelstange 3 drehfest verriegelt (wird nachfolgend noch beschrieben werden). Zum Entriegeln und damit Freigeben der Schwenkbewegung der Kugelstange 3 ist im Ausführungsbeispiel von der Seite des Anbauflansches 5 her an die Anhängekupplung 1 ein Handrad-Auslösemechanismus 16 über einen Bowdenzug 17 angeschlossen, der an seinem in den Kugelstangenlagerkopf 4 eintauchenden Ende mit einem in der Hohlwelle 8 vor- und zurückbewegbaren Sperrbolzen 18 (vgl. die Fig. 3 bis 8) verbunden ist.

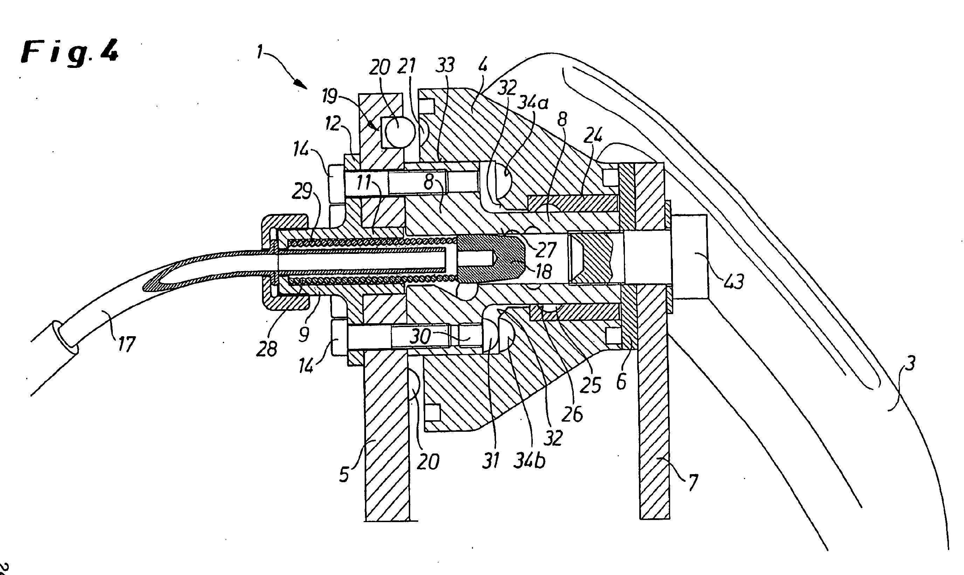

Wie sich den Fig. 3 bis 7 entnehmen läßt, ist in den Drehendlagen (Betriebs- oder Ruhelage) die Kugelstange 3 über eine Formschlußverbindung 19, die hier aus in dem Anbauflansch 5 angeordneten Kugeln 20 und diesen in der Stimfläche des Kugelstangenlagerkopfes 4 gegenüberliegend zugeordneten Kalotten 21 besteht, drehfest festgelegt. Zur Verriegelung dieser Drehendlagen sind für den Sperrbolzen 18 in Radialbohrungen 22, diese sind in Fig. 3 wegen der versetzten Schnittebene nur teilweise zu erkennen, über den Umfang des Kopfes des Sperrbolzens 18 verteilt mehrere Kugeln 23 (vgl. die Fig. 5 sowie 6 und 7) vorgesehen, die von dem Sperrbolzen 18 nach außen gedrückt werden und dabei in eine ihnen in einem Lagerring 24 des Kugelstangenlagerkopfes 4 zugeordnete Aufnahme 25, ausgebildet beispielsweise als Ringnut oder Rille, bewegt werden. Die Aufnahme 25 ist an ihrer zu dem Anbauflansch 5 hin gerichteten Lauffläche mit einer Anlaufschräge 26 (vgl. die Fig. 4 und 6) versehen, die beim Anziehen der Kugelstange 3 in die in den Drehendlagen verriegelte Position eine gezielt ausgerichtete Kraft zur axialen Verschiebung der Kugelstange 3 bzw. des Kugelstangenlagerkopfes 4 in Richtung auf den Anbauflansch 5 bewirkt.

Der Sperrbolzen 18, der an seinem die Kugeln 23 durch die Radialbohrungen 22 in die Aufnahme 25 des Lagerringes 24 drückenden Umfang mit einer selbsthemmenden Schräge 27 und/oder einem Hinterschnitt ausgebildet ist, wird in diese Sperrlage durch ein Kraftelement in Form einer Druckfeder 28 bewegt, die in einer in der Nabe 11 der Montagebuchse 9 ausgebildeten Kammer 29 angeordnet ist. In den Drehendlagen-Verriegelungspositionen der Kugelstange 3 (vgl. die Fig. 3 und 5) taucht ein in den Kragen 13 der Hohlwelle 8 eingeschraubtes Distanzhalterelement 30, ausgeführt als Bolzen, der an seinem innenliegenden freien Ende mit einer Halbkugel 31 versehen ist, in eine in jeder Drehendlage im Boden bzw. Grund 32 einer Ausdrehung 33 des Kugelstangenlagerkopfes 4, mit der dieser den Kragen 13 der Hohlwelle 8 konzentrisch umschließt, vorgesehene Halbkugel-Ausnehmung 34a bzw. 34b ein. Das wird in Fig. 3 gezeigt und ist in der Entriegelungsposition gemäß Fig. 4 deutlicher zu erkennen, wobei die Fig. 3 und 4 zur Verdeutlichung dieses Distanzhalterelementes 30 in der Schnittebene versetzt gezeichnet worden sind.

Zur Auslösung und damit Entriegeln einerseits des Sperrbolzens 18 und andererseits der Formschlußkonturen (Kugeln 20 und Kalotte 21) der Formschlußverbindung 19 zwischen Kugelstangenlagerkopf 4 sowie Anbauflansch 5 und damit Freigeben der Kugelstange 3 zum Verschwenken in eine andere Drehlage, wird der Sperrbolzen 18 durch Betätigung des in einem Kofferraum eines Kraftfahrzeugs befestigten Handrad-Auslösemechanismus 16 gegen die Feder 28, die sich dabei vorspannt, zurückgestellt. Die Kugeln 23 können damit aus der Aufnahme 25 des Lagerringes 24 durch die Radialbohrungen 22 der Hohlwelle 8 nach innen fallen und sich vor den Kopf des Sperrbolzens 18 legen. Damit gleichzeitig einhergehend wird der Kugelstangenlagerkopf 4 aufgrund des Gewichts der Kugelstange 3 schwerkraftbedingt selbsttätig axial von dem Anbauflansch 5 weg bewegt und die Formschlußverbindung 19 der Kugeln 20 bzw. Kalotten 21 aufgehoben. Gleichzeitig zieht sich die Halbkugel 31 des Distanzhalterelementes 30 aus der Halbkugel-Ausnehmung heraus und legt sich in der Folge auf den Grund 32 der Ausdrehung 33 des Kugelstangenlagerkopfes 4. Das Distanzhalterelement 30 hält damit den durch die axiale Verschiebung bewirkten Abstand zwischen den Kugeln 20 sowie Kalotten 21 der Formschlußverbindung 19 aufrecht, so daß die Kugelstange 3 frei verschwenkt.

Erst wenn die Kugelstange 3 hand- oder motorbetätigt in die Drehendlage verschwenkt und der Sperrbolzen 18 durch die Druckfeder 28 beaufschlagt in seine Verriegelungsposition wieder nach vorne bewegt worden ist, werden die Sperrbolzen-Kugeln 23 wieder durch die Radialbohrungen 22 in die Aufnahme 25 des Lagerrings 24 gedrückt und taucht die Halbkugel 31 des Distanzhalterelementes 30 wieder in die zugehörige Halbkugel-Ausnehmung 34a bzw. 34b ein. Die entriegelte Anhängekupplung 1 mit der axial verschobenen und schwerkraftbedingt selbsttätig in eine Zwischenposition verschwenkten Kugelstange 3 ist in den Fig. 4 (hier ohne Darstellung der Kugeln 23) und 6 gezeigt.

Zur Unterstützung der axialen Bewegung der Kugelstange 3 mit ihrem Kugelstangenlagerkopf 4 weg von dem Anbauflansch 5 in den entriegelten Zustand ist bei der Ausführung der Anhängekupplung 1 nach den Fig. 5 und 6 eine Diagonalbohrung 35, in einer ausgehend von dem von der Ausdrehung 33 des Kugelstangenlagerkopfes 4 umschlossenen Kragen 13 der Hohlwelle 8, mit darin angeordneter Kugel 36 vorgesehen. Bei verriegelter Anhängekupplung 1 (vgl. Fig. 5) liegt die Kugel 36 dem Kugelstangenlagerkopf 4 über eine Teilkugelfläche in einer komplementären Ausnehmung 37 in einem Übergangsbereich von dem Grund 32 der Ausdrehung 33 zur zentralen Durchgangsbohrung des Kugelstangenlagerkopfes 4 an, und bewirkt einhergehend mit dem Entriegeln eine Kraftkomponente, die mit für die axiale Bewegung des Kugelstangenlagerkopfes 4 in die in Fig. 6 dargestellte entriegelte Position sorgt.

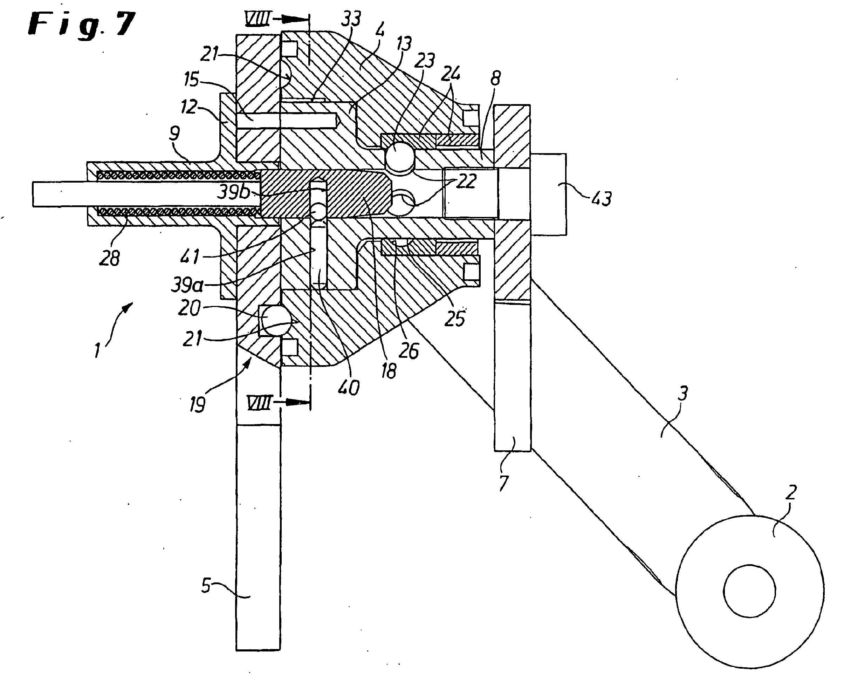

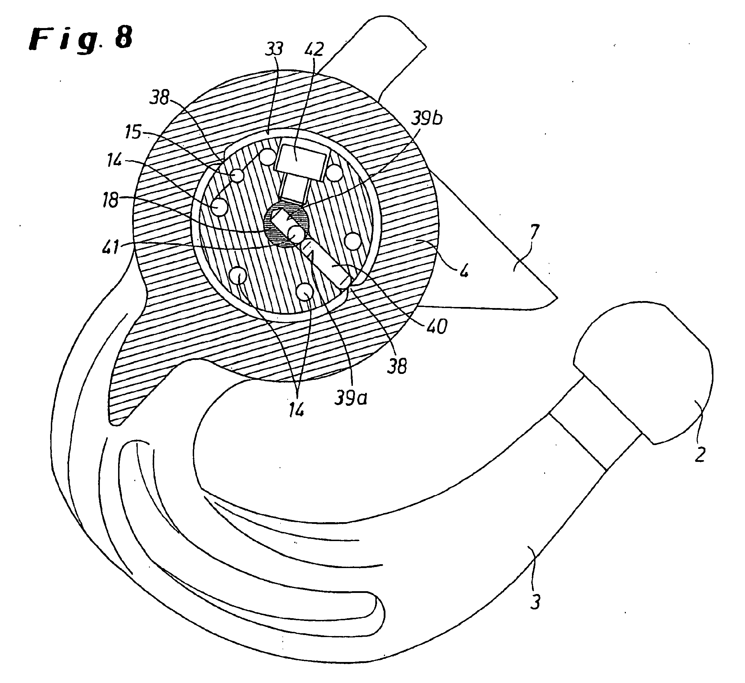

In den Fig. 7 und 8 ist für die Anhängekupplung 1 eine Variante zur Auslösung bzw. Freigabe der Vorwärtsbewegung des Sperrbolzens 18 in die die Kugeln 23 über die Radialbohrungen 22 der Hohlwelle in die Aufnahme 25 des Lagerrings 24 des Kugelstangenlagerkopfes 4 drückende Position gezeigt, wobei in Fig. 7 allerdings abweichend von der Lage der Kugeln 23 noch der Zustand unmittelbar vor dem Vorwärtsbewegen des Sperrbolzens 18 dargestellt wird. Bei dieser Ausführung ist die Ausdrehung 33 des Kugelstangenlagerkopfes 4 miteinander zugewandten Auslösenocken 38 (vgl. Fig. 8) in den jeweiligen Drehendlagen ausgebildet. Diesen sind in einer Radialbohrung 39a des Hohlwellen-Kragens 13 mit in den Sperrbolzen 18 übergehendem Bohrungsfortsatz 39b einerseits ein Stift 40 und andererseits eine Kugel 41 zugeordnet. Sobald in den Drehendlagen der Kugelstange 3 der dazugehörige Auslösenocken 38 auf den Stift 40 trifft, wird dieser tiefer in die Radialbohrung 39a gedrückt und verlagert damit die Kugel 41 in den Radialbohrungs-Fortsatz 39b des Sperrbolzens 18. Dieser wird damit nicht mehr von der zuvor sperrenden Kugel 41 behindert und kann sich unter der Kraft der sich entspannenden Druckfeder 28 axial nach vorne bewegen. Es werden dann die dem Sperrbolzen 18 zugeordneten Kugeln 23 in die die Verriegelungsposition der Kugelstange 3 sichernde Sperrposition - wie in Fig. 7 für die Kugeln 23 bereits gezeigt - gedrückt. Die genaue Lagezuordnung des Sperrbolzens 18 zur Radialbohrung 39a bzw. 39b wird durch eine Verdrehsicherung 42 gewährleistet, die mit einem flächigen Abschnitt des Sperrbolzens 18 zusammenwirkt und diesen exakt in seiner Position hält.

Die nach außen völlig geschlossene Anhängekupplung 1, was keinen Schutzbalg mehr notwendig macht, gleichwohl wahlweise eine beidseitige Abdichtung vorgesehen werden kann, ist in den Ausführungsbeispielen zwischen dem Anbauflansch 5 und dem Verbindungsblech 7 angeordnet, wobei von der Seite des Verbindungsblechs 7 her noch eine Zentralschraube 43 in die Hohlwelle 8 eingeschraubt ist. Es ist aber ohne weiteres auch möglich, die Anhängekupplung 1 lediglich über den Anbauflansch 5 an den mit dem Fahrzeug verbundenen Querträger zu befestigen, so daß das Verbindungsblech 7 entfallen kann. In diesem Fall wäre es ausreichend, in das freie Ende der Hohlwelle 8 einen Stopfen einzusetzen.

## Patentansprüche

1. Anhängekupplung (1) für Kraftfahrzeuge, umfassend eine fahrzeugfest angeordnete, schwenkbar sowie axial verschieblich gelagerte Kugelstange (3), die an ihrem freien Ende eine Kupplungskugel (2) trägt und sowohl in ihrer Ruhelage als auch in ihrer zur Ruhelage verdrehten Betriebslage über in Eingriff bringbare Formschlußkonturen (19; 20; 21) einerseits eines Kugelstangenlagerkopfes (4) und andererseits eines diesem gegenüberliegenden Anbauflansches (5) drehfest festlegbar ist,
**dadurch gekennzeichnet,**
**daß** der Kugelstangenlagerkopf (4) auf einer am Anbauflansch (5) befestigten Hohlwelle (8) angeordnet ist, die zentral integriert mit einer axial wirkenden Verriegelung (18) des Kugelstangenlagerkopfes (4) zum Ineingriff bringen der Formschlußkonturen (19; 20, 21) sowohl in der Betriebslage als auch in der Ruhelage der Kugelstange (3) ausgebildet ist, wobei sich der entriegelte Kugelstangenlagerkopf (4) aufgrund des Gewichts der Kugelstange (3) selbständig axial von dem Anbauflansch weg bewegt.

2. Anhängekupplung nach Anspruch 1,
**dadurch gekennzeichnet,**
**daß** die Verriegelung einen in der Hohlwelle (8) geführten, gegen ein anstehendes Kraftelement (28) über ein von außen betätigbares Druck- oder Zugmittel (16) zurückstellbaren Sperrbolzen (18) und mit diesem zusammenwirkende, in Radialbohrungen (22) der Hohlwelle (8) angeordnete Kugeln (23) umfaßt.

3. Anhängekupplung nach Anspruch 2,
**dadurch gekennzeichnet,**
**daß** den Kugeln (23) im Kugelstangenlagerkopf (4) mit Anlaufschrägen (26) ausgebildete Aufnahmen (25) zugeordnet sind.

4. Anhängekupplung nach Anspruch 3,
**dadurch gekennzeichnet,**
**daß** die Aufnahme (25) in einem im Kugelstangenlagerkopf (4) befestigten Lagerring (24) vorgesehen ist, mit dem sich der Kugelstangenlagerkopf (4) bei seiner axialen Verschiebung über die Hohlwelle (8) bewegt.

5. Anhängekupplung nach einem der Ansprüche 2 bis 4,
**dadurch gekennzeichnet,**
**daß** der Sperrbolzen (18) mit einer selbsthemmenden Schräge (27) und/oder einem Hinterschnitt versehen ist.

6. Anhängekupplung nach Anspruch 5,
**dadurch gekennzeichnet,**
**daß** der Sperrbolzen (18) mit einer Verdrehsicherung (42) versehen ist.

7. Anhängekupplung nach einem der Ansprüche 1 bis 6,
**dadurch gekennzeichnet,**
**daß** zur Formschlußverbindung (19) von Kugelstangenlagerkopf (4) und Anbauflansch (5) in deren einander gegenüberliegenden Stimflächen auf gleichen Teilkreisen gleichmäßig verteilt einerseits Kugeln (20) und andererseits Kalotten (21) ausgebildet sind.

8. Anhängekupplung nach einem der Ansprüche 1 bis 7,
**gekennzeichnet durch**
ein in einem von einer Ausdrehung (33) des Kugelstangenlagerkopfes (4) konzentrisch umschlossenen Kragen (13) der Hohlwelle (8) eingesetztes, mit einem an seinem vorderen Ende als Halbkugel (31) ausgebildetes, bei drehfester Ineingriffposition der Formschlußverbindung (19) in eine Halbkugel-Ausnehmung (34a; 34b) im Grund (32) der Ausdrehung (33) eintauchendes und bei der axialen Verschiebung des Kugelstangenlagerkopfes (4) aus der Halbkugel-Ausnehmung (34a; 34b) mit der Halbkugel (31) freikommendes und sich dann an den Grund (32) der Ausdrehung (33) anlegendes Distanzhalterelement (30).

9. Anhängekupplung nach einem der Ansprüche 1 bis 8,
**dadurch gekennzeichnet,**
**daß** in einer ausgehend von einem von einer Ausdrehung (33) des Kugelstangenlagerkopfes (4) konzentrisch umschlossenen Kragen (13) der Hohlwelle (8) ausgebildeten Bohrung (35) eine beim Lösen der Verriegelung des Sperrbolzens (18) den Kugelstangenlagerkopf (4) axial verschiebende Kugel (36) angeordnet ist.

10. Anhängekupplung nach einem der Ansprüche 1 bis 9,
**dadurch gekennzeichnet,**
**daß** der Kugelstangenlagerkopf (4) mit einer Ausdrehung (33) konzentrisch auf einem Kragen (13) der Hohlwelle (8) angeordnet ist und in der Wand der Ausdrehung (33) einander zugewandt zwei Auslösenocken (38) vorgesehen sind, denen in einer sich bis in den Sperrbolzen (18) fortsetzenden Radialbohrung (39a; 39b) des Hohlwellen-Kragens (13) ein Stift (40) zugeordnet ist, der in seiner Deckungsposition mit den Auslösenocken (38) eine Kugel (41) in die Radialbohrung (39b) des Sperrbolzens (18) beaufschlagt.

11. Anhängekupplung nach einem der Ansprüche 1 bis 10,
**dadurch gekennzeichnet,**
**daß** von der dem Kugelstangenlagerkopf (4) abgewandten Außenseite des Anbauflansches (5) her in eine zentrische Bohrung (10) des Anbauflansches (5) eine die zentrische Bohrung (10) mit einem Flansch (12) überkragende Montagebuchse (9) mit einer Nabe (11) eingesetzt ist und die Hohlwelle (8) über in den Flansch (12) der Montagebuchse (9) angeordnete Schrauben (14) befestigt ist.

12. Anhängekupplung nach Anspruch 11,
**dadurch gekennzeichnet,**
**daß** die Nabe (11) der Montagebuchse (9) als Kammer (29) zur Aufnahme des den Sperrbolzen (18) beaufschlagenden Kraftelementes (28) ausgebildet ist.

13. Anhängekupplung nach einem der Ansprüche 1 bis 12,
**dadurch gekennzeichnet,**
**daß** zwischen dem von dem Anbauflansch (5) entfernten Ende der Hohlwelle (8) und einem dort vorgesehenen Verbindungsblech (7) eine Ausgleichsscheibe (6) angeordnet ist.

14. Anhängekupplung nach Anspruch 13,
**dadurch gekennzeichnet,**
**daß** eine durch das Verbindungsblech (7) und die Augleichsscheibe (6) gesteckte Zentralschraube (43) in ein Innengewinde der Hohlwelle (8) eingeschraubt ist.

15. Anhängekupplung nach Anspruch 13 oder 14,
**dadurch gekennzeichnet,**
**daß** die Kugelstange (3) direkt über den Anbauflansch (5) mit einem am Fahrzeug befestigten Querträger verbunden ist.

16. Anhängekupplung nach einem der Ansprüche 13 bis 15,
**dadurch gekennzeichnet,**
**daß** das Verbindungsbiech (7) und/oder der Anbauflansch (5) an einem Mittelteil eines mehrteiligen Querträgers befestigt ist bzw. sind.

17. Anhängekupplung nach einem der Ansprüche 13 bis 16,
**dadurch gekennzeichnet,**
**daß** das Verbindungsblech (7) und/oder der Anbauflansch (5) mit der Kugelstange (3) außermittig am Querträger befestigt ist bzw.sind.

18. Anhängekupplung nach einem der Ansprüche 1 bis 17,
**gekennzeichnet durch**
einen motorischen Dreh- und Schwenkantrieb der Kugelstange (3).

19. Anhängekupplung nach einem der Ansprüche 1 bis 18,
**dadurch gekennzeichnet,**
**daß** der Kugelstange (3) ein deren Schwenkbewegungen mitmachender Steckdosenhalter zugeordnet ist.

20. Anhängekupplung nach einem der Ansprüche 1 bis 19,
**dadurch gekennzeichnet,**
**daß** zumindest einige ihrer Bauteile aus Leichtmetall gefertigt sind.

21. Anhängekupplung nach einem der Ansprüche 1 bis 20,
**dadurch gekennzeichnet,**
**daß** mechanisch stark belastete und beanspruchte Bereiche der Kupplungs-Bauteile, z. B. der Kugelstangenlagerkopf (4) und/oder die Kalotten (21), gehärtet sind.

## Claims

1. A trailer coupling (1) for motor vehicles, comprising a pivoting, axially sliding, strap-down ball rod (3), which carries a coupling ball (2) on its free end, and can be secured in a torsion-resistant manner in both its idle position and its operating position twisted relative to the idle position via mutually engageable, interlocking contours (19; 20; 21) of a ball rod bearing head (4) on the one hand and a mounting flange (5) located opposite thereto on the other, **characterized in that** the ball rod bearing head (4) is situated on a hollow shaft (8), which is secured to the mounting flange (5), and centrally integrated with an axially acting locking device (18) of the ball rod bearing head (4) for mutually engaging the interlocking contours (19; 20, 21) both in the operating position and idle position of the ball rod (3), wherein the unlatched ball rod bearing head (4) automatically moves axially away from the mounting flange owing to the weight of the ball rod (3).

2. The trailer coupling according to claim 1, **characterized in that** the locking device comprises a locking bolt (18) that is guided in the hollow shaft (8) and can be reset against an available force element (28) via an outwardly actuatable pressure or traction mechanism (16), along with balls (23) interacting therewith situated in radial holes (22) of the hollow shaft (8).

3. The trailer coupling according to claim 2, **characterized in that** receptacles (25) provided with start inclines (26) are allocated to the balls (23) in the ball rod bearing head (4).

4. The trailer coupling according to claim 3, **characterized in that** the receptacle (25) is provided in a bearing ring (24) secured in the ball rod bearing head (4), with which the ball or bearing head (4) moves as it shifts axially over the hollow shaft (8).

5. The trailer coupling according to one of claims 2 to 4, **characterized in that** the locking pin (18) is provided with a self-inhibiting incline (27) and/or a back cut.

6. The trailer coupling according to claim 5, **characterized in that** the locking pin (18) is provided with a torsion-resistant safety (42).

7. The trailer coupling according to one of claims 1 to 6, **characterized in that** balls (20) and spherical caps (21) are uniformly distributed to establish the interlocking connection (19) of the ball rod bearing head (4) and mounting flange (5) in their mutually opposing faces on identical semicircles.

8. The trailer coupling according to one of claims 1 to 7, **characterized by** a spacing element (30) that is placed in a collar (13) of the hollow shaft (8) concentrically enveloped by a bore (33) of the ball rod bearing head (4), submerges into a half-ball recess (34a; 34b) in the base (32) of the bore (33) given a torsionally resistant meshing position of the interlocking connection (19), releases from the half-ball bore (34a; 34b) with the half-ball (31) while axially shifting the ball rod bearing head, and then abuts the base (32) of the bore (33).

9. The trailer coupling according to one of claims 1 to 8, **characterized in that** a ball (36) that can axially shift the ball rod bearing head (4) when loosening the locking device of the locking bolt (18) is arranged in a hole (35) formed proceeding from a collar (13) of the hollow shaft (8) concentrically enveloped by a bore (33) of the ball rod bearing head (4).

10. The trailer coupling according to one of claims 1 to 9, **characterized in that** the ball rod bearing head (4) with a bore (33) is concentrically arranged on a collar (13) of the hollow shaft (8), and two release cams (38) facing each other are provided in the wall of the bore (33), allocated to a pin (40) in a radial hole (39a; 39b) of the hollow shaft collar (13) up to the locking pins (18), wherein the release cam (38) impacts a ball (41) in the radial hole (39b) of the locking pin (18) in the cover position of the pin.

11. The trailer coupling according to one of claims 1 to 10, **characterized in that** a mounting bush (9) with a hub (11) is inserted into a central hole (10) of the mounting flange (5) from the outside of the mounting flange (5) facing away from the ball rod bearing head (4), and the hollow shaft (8) is secured via screws (14) arranged in the flange (12) of the mounting bush (9).

12. The trailer coupling according to claim 11, **characterized in that** the hub (11) of the mounting bush (9) is designed as a chamber (29) for accommodating the force element (28) that actuates the locking pin (18).

13. The trailer coupling according to one of claims 1 to 12, **characterized in that** a balancing disk (6) is arranged between the end of the hollow space (8) remote from the mounting flange (5) and a connection sheet (7) provided there.

14. The trailer coupling according to claim 13, **characterized in that** a central screw (43) inserted through the connection sheet (7) and balancing disk (6) is screwed into a female thread of the hollow shaft (8).

15. The trailer coupling according to claim 13 or 14, **characterized in that** the ball rod (3) is directly connected via the mounting flange (5) with a crosstie secured to the vehicle.

16. The trailer coupling according to one of claims 13 to 15, **characterized in that** the connection sheet (7) and/or the mounting flange (5) is/are secured to a middle section of a multipart crosstie.

17. The trailer coupling according to one of claims 13 to 16, **characterized in that** the connection sheet (7) and/or the mounting flange (5) is/are secured to the crosstie with the ball rod (3) off-center.

18. The trailer coupling according to one of claims 1 to 17, **characterized by** a motorized rotating and pivoting drive for the ball rod (3).

19. The trailer coupling according to one of claims 1 to 18, **characterized in that** the ball rod (3) has allocated to it a receptacle outlet holder that mimics its pivoting motions.

20. The trailer coupling according to one of claims 1 to 19, **characterized in that** at least some of its components are made out of light metal.

21. The trailer coupling according to one of claims 1 to 20, **characterized in that** areas of the coupling components placed under a heavy mechanical load and stress are hardened, e.g., the ball rod bearing head (4) and/or the spherical caps (21).

## Revendications

1. Système d'attelage (1) pour véhicules automobiles, comprenant une barre à boule (3) disposée fixement sur le véhicule et s'appuyant de manière pivotable ainsi que déplaçable axialement, qui supporte à son extrémité libre une boule d'attelage (2) et, aussi bien dans sa position de repos que dans sa position de fonctionnement tournée par rapport à sa position de repos, peut être fixé de manière fixe en pivotement par des contours en correspondance géométrique (19 ; 20 ; 21) pouvant être mis en engrènement d'une part d'une lanterne de barre à boule (4) et d'autre part d'une bride annexe (5) opposée à celle-ci,
**caractérisé en ce que**
la lanterne de barre à boule (4) est disposée sur un arbre creux (8) fixé sur la bride annexe (5), lequel arbre creux est conformé en intégration centrale avec un verrouillage (18) agissant axialement de la lanterne de barre à boule (4) de manière à mettre en engrènement les contours en correspondance géométrique (19 ; 20; 21) aussi bien en position de fonctionnement qu'en position de repos de la barre à boule (3), tandis que la lanterne de barre à boule (4) se déverrouillant s'éloigne axialement de la bride annexe de manière autonome en raison du poids de la barre à boule (3).

2. Système d'attelage selon la revendication 1,
**caractérisé en ce que**
le verrouillage comprend un boulon de blocage (18) guidé dans l'arbre creux (8), réinitialisable à l'encontre d'un élément de force (28) intervenant au moyen d'un moyen de pression ou de traction (16) actionnable de l'extérieur et des boules (23) coopérant avec ce boulon et disposées dans des alésages radiaux (22) de l'arbre creux (8).

3. Système d'attelage selon la revendication 2,
**caractérisé en ce que**
aux boules (23) sont associés des supports (25) conformés avec des biseaux de départ (26) dans la lanterne de barre à boule (4).

4. Système d'attelage selon la revendication 3,
**caractérisé en ce que**
le support (25) est prévu dans une bague de roulement (24) fixée dans la lanterne de barre à boule (4) et au moyen de laquelle la lanterne de barre à boule (4) se déplace lors de son mouvement axial au dessus de l'arbre creux (8).

5. Système d'attelage selon une des revendications 2 à 4,
**caractérisé en ce que**
le boulon de blocage (18) est équipé d'un biseau autobloquant (27) et/ou d'un dégagement.

6. Système d'attelage selon la revendication 5,
**caractérisé en ce que**
le boulon de blocage (18) est équipé d'un système anti-torsion (42).

7. Système d'attelage selon une des revendications 1 à 6,
**caractérisé en ce que**,
pour le raccordement par correspondance géométrique (19) de la lanterne de barre à boule (4) et de la bride annexe (5), sont réalisées, avec une répartition régulière dans ses surfaces frontales opposées les unes aux autres sur les mêmes cercles primitifs, d'une part des boules (20) et d'autre part des calottes (21).

8. Système d'attelage selon une des revendications 1 à 7,
**caractérisé par**
un élément d'espacement (30) inséré dans une collerette (13) entourée concentriquement par une percée (33) de la lanterne de barre de boule (4) de l'arbre creux (8), réalisé à son extrémité avant sous forme d'hémisphère (31), plongeant, en position d'engrènement fixe en rotation du raccordement par correspondance géométrique (19), dans un évidement pour hémisphère (34a ; 34b) au fond de la percée (33) et se dégageant, lors du déplacement axial de la lanterne de barre de boule (4), de l'évidement pour hémisphère (34a ; 34b) avec l'hémisphère (31) puis se posant sur le fond (32) de la percée (33).

9. Système d'attelage selon une des revendications 1 à 8,
**caractérisé en ce que**,
dans un alésage (35) pratiqué en partant d'une collerette (13) entourée concentriquement d'une percée (33) de la lanterne de barre de boule (4) de l'arbre creux (8), est disposée une boule (36) déplaçant axialement la lanterne de barre de boule (4) lorsqu'on défait le verrouillage du boulon de blocage (18).

10. Système d'attelage selon une des revendications 1 à 9,
**caractérisé en ce que**
la lanterne de barre de boule (4) dotée d'une percée (33) est disposée concentriquement sur une collerette (13) de l'arbre creux (8) et qu'il est prévu, dans la paroi de la percée (33) deux cames de déclenchement (38) tournées l'une vers l'autre, auxquelles est associée, dans l'alésage radial (39a ; 39b) se continuant jusque dans le boulon de blocage (18) de la collerette de l'arbre creux (13), une goupille (40) qui, dans sa position de recouvrement avec les cames de déclenchement (38), percute une boule (41) dans l'alésage radial (39b) du boulon de blocage (18).

11. Système d'attelage selon une des revendications 1 à 10,
**caractérisé en ce que**,
par le côté extérieur détourné de la lanterne de barre de boule (4) de la bride annexe (5), dans un alésage centré (10) de la bride annexe (5), est inséré un manchon de montage (9) surplombant l'alésage centré (10) avec une bride (12), avec un moyeu (11), et que l'arbre creux (8) est fixé par des vis (14) disposées dans la bride (12) du manchon de montage (9).

12. Système d'attelage selon la revendication 11,
**caractérisé en ce que**
le moyeu (11) du manchon de montage (9) est réalisé sous forme d'une chambre (29) destinée à recevoir l'élément de force (28) percutant le boulon de blocage (18).

13. Système d'attelage selon une des revendications 1 à 12,
**caractérisé en ce que**,
entre l'extrémité éloignée de la bride annexe (5) de l'arbre creux (8) et une tôle de raccordement (7) qui y est prévue, est disposée une rondelle de réglage (6).

14. Système d'attelage selon la revendication 13,
**caractérisé en ce que**
une vis centrale (43) fichée dans la tôle de raccordement (7) et la rondelle de réglage (6) est vissée dans le filetage intérieur de l'arbre creux (8).

15. Système d'attelage selon la revendication 13 ou 14,
**caractérisé en ce que**
la barre à boule (3) est reliée directement par la bride annexe (5) à un longeron fixé au véhicule.

16. Système d'attelage selon une des revendications 13 à 15,
**caractérisé en ce que**
la tôle de raccordement (7) et/ou la bride annexe (5) est ou sont fixées à une pièce centrale d'un longeron fait de plusieurs pièces.

17. Système d'attelage selon une des revendications 13 à 16,
**caractérisé en ce que**
la tôle de raccordement (7) et/ou la bride annexe (5) avec la barre à boule (3) est ou sont fixées sur le longeron en dehors du centre.

18. Système d'attelage selon une des revendications 1 à 17,
**caractérisé par**
une commande de rotation et de pivotement motorisée de la barre à boule (3).

19. Système d'attelage selon une des revendications 1 à 18,
**caractérisé en ce que**
à la barre à boule (3) est associée un support de prise de courant suivant ses mouvements de pivotement.

20. Système d'attelage selon une des revendications 1 à 19,
**caractérisé en ce que**
au moins certaines de ses composantes sont fabriquées en métal léger.

21. Système d'attelage selon une des revendications 1 à 20,
**caractérisé en ce que**
les zones fortement chargées et sollicitées mécaniquement des composantes de l'attelage, par exemple la lanterne de barre de boule (4) et/ou les calottes (21), sont trempées.
